# EUROPEAN PATENT APPLICATION

(11) **EP 4 510 352 A1**
(43) Date of publication of application: **19.02.2025**
(21) Application number: 23859207.5
(22) Date of filing: 22.08.2023
(51) Int. Cl.: H01M 50/342, H01M 50/103, H01M 50/209

(54) **HOUSING, BATTERY CELL, BATTERY, AND ELECTRIC DEVICE**

(30) Priority: 02.09.2022 CN 202211068028
(71) Applicant: Jiangsu Contemporary Amperex Technology Limited, Changzhou, Jiangsu 213300 (CN); Contemporary Amperex Technology Co., Limited, Ningde, Fujian 352100 (CN)
(72) Inventor: KE, Haibo, Changzhou, Jiangsu 213300 (CN); LI, Quankun, Changzhou, Jiangsu 213300 (CN); WANG, Peng, Changzhou, Jiangsu 213300 (CN); HUANG, Shoujun, Changzhou, Jiangsu 213300 (CN); CHENG, Qi, Changzhou, Jiangsu 213300 (CN); MEI, Xiang, Changzhou, Jiangsu 213300 (CN)
(74) Representative: Ran, Handong
(86) International application number: PCT/CN2023/114264
(87) International publication number: WO 2024/046174

(57) **Abstract**

The present application relates to the technical field of batteries, and discloses a housing, a battery cell, a battery, and an electric device. The housing has at least three edges intersecting at a same vertex. A score groove is formed in the housing, and the score groove at least intersects two edges. Because the deformation resistance of an area near the edges of the housing is high, the possibility that the score groove abnormally fractures due to creep of the area where the housing is provided with the score groove is reduced, so that the service life of the battery cell is prolonged.

## Description

### CROSS-REFERENCE TO RELATED APPLICATIONS

This application claims priority to Chinese Patent Application No. 202211068028.X, filed on September 02, 2022 and entitled "HOUSING, BATTERY CELL, BATTERY, AND ELECTRIC DEVICE, which is incorporated herein by reference in its entirety.

### TECHNICAL FIELD

This application relates to the field of battery technologies, and specifically, to a housing, a battery cell, a battery, and an electric device.

### BACKGROUND

Batteries are widely used in electronic devices such as electric bicycles, electric vehicles, electric airplanes, and electric ships.

In the development of battery technology, in addition to the performance improvement of battery cells, the service life of battery cells is also an issue that needs consideration.

Therefore, how the service life of battery cells is prolonged is an urgent problem that needs to be solved in battery technology.

### SUMMARY

In view of the foregoing problem, this application provides a housing, a battery cell, a battery, and an electric device, so as to effectively prolong service life of the battery cell.

According to a first aspect, this application provides a housing. The housing has at least three edge portions intersecting at a same vertex; and the housing is provided with an indentation groove, the indentation groove intersecting with at least two of the edge portions.

In the technical solution of the embodiments of this application, the housing has at least three edge portions intersecting at a same vertex, and the indentation groove intersects with at least two of the edge portions, such that the region in which the indentation groove is provided on the housing is located near the at least two edge portions of the housing. Because the region near the edge portion of the housing has strong deformation resistance, the probability of abnormal cracking of the indentation groove due to creeping of the region in which the indentation groove is provided on the housing is reduced, prolonging service life of the housing, thereby prolonging service life of the battery cell.

In some embodiments, the housing in the embodiments of this application includes a first wall, a second wall, and a third wall, where the first wall, the second wall, and the third wall are connected to each other in pairs to form three of the edge portions intersecting at the vertex. The housing having three edge portions intersecting at a same vertex may be a cuboid, a tetrahedron, or of another shape, and such a housing has advantages such as ease of processing and mass production.

In some embodiments, the indentation groove includes a first groove segment, where the first groove segment is disposed on the first wall, and two ends of the first groove segment extend to two of the edge portions located at edges of the first wall respectively. The two edge portions of the first wall can reinforce the region in which the first groove segment is disposed on the housing, thereby improving fatigue resistance of the region in which the first groove segment is disposed on the housing and prolonging the service life of the battery cell.

In some embodiments, the first groove segment is arc-shaped. With such a design, each portion of the first groove segment has basically the same distance to the vertex, so that each portion of the first groove segment has roughly equal difficulty in bursting, allowing the first groove segment to crack in a timely manner, thereby improving pressure relief efficiency.

In some embodiments, the first groove segment is disposed on the first wall to form a first weak portion, where thickness of the first weak portion is D₁, satisfying 0.05 mm ≤ D₁ ≤ 0.7 mm. The thickness of the first weak portion being set within an appropriate range can reduce the risk of insufficient bursting pressure due to excessively small thickness and inadequate strength of the first weak portion, and can also reduce the risk of the indentation groove failing to crack for pressure relief in a timely manner due to excessively large thickness of the first weak portion.

In some embodiments, the indentation groove further includes a second groove segment, where the second groove segment is disposed on the second wall, and two ends of the second groove segment extend to two of the edge portions located at edges of the second wall respectively. The two ends of the second groove segment extend to the two edge portions located at the edges of the second wall respectively. The two edge portions of the second wall can reinforce the region in which the second groove segment is disposed on the housing, thereby improving fatigue resistance of the region in which the second groove segment is disposed on the housing and prolonging the service life of the battery cell. In addition, with the first groove segment disposed on the first wall, the second groove segment is disposed on the second wall, so that when the battery cell relieves the pressure, the housing can crack at the positions of the first groove segment and the second groove segment, increasing a pressure relief area of a pressure relief apparatus, thereby improving the pressure relief efficiency.

In some embodiments, the second groove segment is arc-shaped. With such a design, each portion of the second groove segment has basically the same distance to the vertex, so that each portion of the second groove segment has roughly equal difficulty in bursting, allowing the second groove segment to crack in a timely manner, thereby improving the pressure relief efficiency.

In some embodiments, the second groove segment is connected to the first groove segment. With such a design, the housing can partially open with the first groove segment and the second groove segment as boundaries, increasing the pressure relief area, thereby improving the pressure relief efficiency.

In some embodiments, the first groove segment is disposed on the first wall to form a first weak portion, and the second groove segment is disposed on the second wall to form a second weak portion; where thickness of the first weak portion is equal to thickness of the second weak portion. With such a design, the first weak portion and the second weak portion have roughly equal difficulty in cracking, allowing the first weak portion and the second weak portion to crack synchronously during pressure relief.

In some embodiments, the second groove segment is disposed on the second wall to form a second weak portion; where thickness of the second weak portion is D₂, satisfying 0.05 mm ≤ D₂ ≤ 0.7 mm. The thickness of the second weak portion being set within an appropriate range can reduce the risk of insufficient bursting pressure due to excessively small thickness and inadequate strength of the second weak portion, and can also reduce the risk of the indentation groove failing to crack for pressure relief in a timely manner due to excessively large thickness of the second weak portion.

In some embodiments, the indentation groove includes a third groove segment, where the third groove segment is disposed on the third wall, and two ends of the third groove segment extend to two of the edge portions located at edges of the third wall respectively. The two ends of the third groove segment extend to the two edge portions located at the edges of the third wall respectively.

The two edge portions of the third wall can reinforce the region in which the third groove segment is disposed on the housing, thereby improving fatigue resistance of the region in which the third groove segment is disposed on the housing and prolonging the service life of the battery cell.

In addition, with the first groove segment disposed on the first wall and the second groove segment disposed on the second wall, the third groove segment is disposed on the third wall, so that when the battery cell relieves the pressure, the housing can crack at the positions of the first groove segment, the second groove segment, and the third groove segment, increasing the pressure relief area of the pressure relief apparatus, thereby improving the pressure relief efficiency.

In some embodiments, the third groove segment is arc-shaped. With such a design, each portion of the third groove segment has basically the same distance to the vertex, so that each portion of the third groove segment has roughly equal difficulty in bursting, allowing the third groove segment to crack in a timely manner, thereby improving the pressure relief efficiency.

In some embodiments, two ends of the third groove segment are connected to the first groove segment and the second groove segment respectively, and an end of the first groove segment facing away from the third groove segment is connected to or spaced apart from an end of the second groove segment facing away from the third groove segment. When the end of the first groove segment facing away from the third groove segment is connected to the end of the second groove segment facing away from the third groove segment, the region jointly defined by the first groove segment, the second groove segment, and the third groove segment can detach to open for pressure relief. When the end of the first groove segment facing away from the third groove segment is spaced apart from the end of the second groove segment facing away from the third groove segment, the region jointly defined by the first groove segment, the second groove segment, and the third groove segment can flip to open for pressure relief.

In some embodiments, the first groove segment is disposed on the first wall to form a first weak portion, the second groove segment is disposed on the second wall to form a second weak portion, and the third groove segment is disposed on the third wall to form a third weak portion, where thickness of the first weak portion, thickness of the second weak portion, and thickness of the third weak portion are equal. With such a design, the first weak portion, the second weak portion, and the third weak portion have roughly equal difficulty in cracking, allowing the first weak portion, the second weak portion, and the third weak portion to crack synchronously during pressure relief.

In some embodiments, the third groove segment is disposed on the third wall to form a third weak portion, where thickness of the third weak portion is D₃, satisfying 0.05 mm ≤ D₃ ≤ 0.7 mm. The thickness of the third weak portion being set within an appropriate range can reduce the risk of insufficient bursting pressure due to excessively small thickness and inadequate strength of the third weak portion, and can also reduce the risk of the indentation groove failing to crack for pressure relief in a timely manner due to excessively large thickness of the third weak portion.

In some embodiments, the housing includes an accommodating space formed by a plurality of walls, where the accommodating space is used to accommodate an electrode assembly, the accommodating space has an opening, and the opening is opposite the third wall. Such a housing can accommodate the electrode assembly through the opening, resulting in low assembly difficulty of the electrode assembly.

In some embodiments, the first wall, the second wall, and the third wall are connected to each other in pairs via arc walls, the arc walls being the edge portions. Such a housing being subjected to fillet processing facilitates assembly of the housing.

In some embodiments, the housing is a cuboid.

In some embodiments, the indentation groove is provided on an outer surface of the housing. With such a design, processing difficulty of the indentation groove is reduced.

According to a second aspect, this application provides a battery cell including the housing according to the foregoing embodiments.

According to a third aspect, this application provides a battery including a box configured to accommodate a battery cell and the battery cell according to the foregoing embodiments.

According to a fourth aspect, this application provides an electric device including the battery according to the foregoing embodiments.

The foregoing description is merely an overview of the technical solutions of this application. For a better understanding of the technical means in this application such that they can be implemented according to the content of the specification, and to make other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments, and should not be construed as any limitation on this application. In addition, in all the accompanying drawings, the same reference signs represent the same components. In the accompanying drawings:
FIG. 1 is a schematic structural diagram of a vehicle according to some embodiments of this application;
FIG. 2 is an exploded view of a battery according to some embodiments of this application;
FIG. 3 is a schematic structural diagram of a battery module according to some embodiments of this application;
FIG. 4 is an exploded view of a battery cell according to some embodiments of this application;
FIG. 5 is a schematic structural diagram of a housing according to some embodiments of this application;
FIG. 6 is a partially enlarged view of position A in FIG. 5;
FIG. 7 is a partially cross-sectional view of a first wall shown in FIG. 5;
FIG. 8 is a schematic structural diagram of a housing according to some other embodiments of this application;
FIG. 9 is a partially enlarged view of position B in FIG. 8;
FIG. 10 is a schematic structural diagram of a housing according to still some other embodiments of this application;
FIG. 11 is a partially enlarged schematic structural diagram of position C in FIG. 10;
FIG. 12 is a partially cross-sectional view of a second wall shown in FIG. 8 or FIG. 10;
FIG. 13 is a schematic structural diagram of a housing according to yet some other embodiments of this application;
FIG. 14 is a partially enlarged schematic structural diagram of position D in FIG. 13 of this application;
FIG. 15 is a schematic structural diagram of a housing according to other embodiments of this application;
FIG. 16 is a partially enlarged schematic structural diagram of position E in FIG. 15; and
FIG. 17 is a partially cross-sectional view of a third wall shown in FIG. 13 or FIG. 15.

Reference signs in the specific embodiments are described as follows:
10000. vehicle; 3000. controller; 4000. motor;
1000. battery; 101. first portion; 102. second portion;
100. battery module;
10. battery cell;
1. housing; 11. housing body; 12. end cover; 2. electrode assembly; 3. indentation groove; 4. electrode terminal; 5. connecting member;
111. first wall; 1111. first weak portion; 112. second wall; 1121. second weak portion; 113. third wall; 1131. third weak portion; 114. edge portion; 115. vertex;
31. first groove segment; 32. second groove segment; and 33. third groove segment.

### DESCRIPTION OF EMBODIMENTS

The following describes in detail embodiments of technical solutions of this application with reference to the accompanying drawings. The following embodiments are merely used to describe the technical solutions in this application more clearly, and therefore are merely used as examples and do not constitute any limitation on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims, and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means more than two, unless otherwise specifically defined.

In this specification, reference to "embodiment" means that specific features, structures, or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the apparatuses or elements mentioned must have specific orientations or must be constructed or manipulated according to specific orientations, and therefore shall not be construed as any limitations on the embodiments of this application.

In the description of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

The batteries mentioned in the art can be classified into primary batteries and rechargeable batteries based on whether the batteries are rechargeable. Currently, common types of rechargeable batteries include lead-acid battery, nickel-hydrogen battery, and lithium-ion battery. At present, lithium-ion batteries are widely used in battery electric vehicles and hybrid electric vehicles. The lithium-ion batteries used for this purpose have a relatively low capacity but a relatively large output and charging current and a relatively long service life, although the cost is relatively high.

The battery described in the embodiments of this application is a rechargeable battery. The following mainly uses the lithium-ion battery as an example to describe the embodiments disclosed in this application. It should be understood that the embodiments disclosed in this application are applicable to any other suitable type of rechargeable battery. The battery mentioned in the embodiments disclosed in this application may be directly or indirectly applied to an appropriate apparatus to supply power to the apparatus.

The battery mentioned in the embodiments disclosed in this application is a single physical module that includes one or more battery cells for providing a predetermined voltage and capacity. The battery cell is a basic unit in a battery, and can be typically categorized into three types depending on its packaging: cylindrical battery cell, cuboid battery cell, and pouch battery cell. The following will mainly focus on the cuboid battery cell. It should be understood that the embodiments described below are also applicable to the cylindrical battery cell or pouch battery cell in some aspects.

The battery cell includes a positive electrode plate, a negative electrode plate, an electrolyte, and a separator. The lithium-ion battery cell mainly relies on migration of lithium ions between the positive electrode plate and the negative electrode plate to work. A film structure with three layers of materials in the cylindrical battery cell is wound into a cylindrical electrode assembly, and a film structure in the cuboid battery cell is wound or stacked into a roughly cuboid electrode assembly.

In a typical battery cell structure, the battery cell includes a housing, an electrode assembly, and an electrolyte. The electrode assembly is accommodated in the housing of the battery cell, and the electrode assembly includes a positive electrode plate, a negative electrode plate, and a separator. The housing includes a housing and an end cover. The housing includes an accommodating chamber formed by a plurality of walls, and an opening. The end cover is disposed at the opening to seal the accommodating chamber. In addition to the electrode assembly, the accommodating chamber further accommodates the electrolyte. The positive electrode plate and the negative electrode plate in the electrode assembly each include a tab. To reduce the risk of fusing due to a large current passing through, a plurality of positive electrode tabs are provided and stacked together, and a plurality of negative electrode tabs are provided and stacked together. The tab is electrically connected to an electrode terminal outside the battery cell via a connecting member, and the electrode terminal generally includes a positive electrode terminal and a negative electrode terminal. For the cuboid battery cell, the electrode terminal is generally disposed on the end cover. A plurality of battery cells are connected in series and/or in parallel through electrode terminals for various application scenarios.

In some high-power application scenarios such as an electric vehicle, the application of the battery includes three levels: a battery cell, a battery module, and a battery. The battery module is formed by electrically connecting a specific quantity of battery cells and putting the battery cells into a frame to protect the battery cells from external impact, heat, vibration, and the like. The battery is a final state of a battery system assembled in an electric vehicle. The battery generally includes a box for packaging one or more battery cells. The box generally consists of a cover body and a box housing.

For the battery cell, main safety hazards are in the charging and discharging processes. In addition, a suitable ambient temperature also needs to be designed. To effectively reduce the risk of unnecessary losses, at least triple protection measures are generally provided for the battery cell. Specifically, the protection measures include at least a switch element, an appropriately selected separator material, and a housing.

For the housing, a pressure relief groove may be disposed on the housing to form a weak portion, and the housing relieves pressure after the weak portion cracks.

In normal use of the battery cell, the weak portion of the housing may experience abnormal cracking. Generally, the pressure relief groove is provided in the middle region of a wall of the housing, and in actual operation of the battery cell, the internal pressure of the housing varies with the ambient temperature. In the process of continuous changes in the internal pressure of the battery cell, the housing is repeatedly impacted by the pressure. As a result, the weak portion of the housing is likely to creep, causing the pressure relief groove to crack prematurely, thereby reducing service life of the battery cell.

In view of this, to solve the problem of reduced service life of the battery cell caused by the premature cracking of the pressure relief groove due to creeping of the weak portion of the housing, this application provides a housing. The pressure relief groove on the housing intersects with at least two edge portions of the housing, so that the region in which the pressure relief groove is provided on the housing has improved deformation resistance, reducing the probability of premature cracking of the pressure relief groove due to creeping of the weak portion formed after the pressure relief groove is provided on the housing.

The technical solution described in the embodiments of this application is applicable to battery cells, batteries, and electric devices using a battery.

The electric device includes but is not limited to an electric bicycle, an electric vehicle, a ship, and a spacecraft. For example, the spacecraft includes an airplane, a rocket, a space shuttle, a spaceship, and the like.

For ease of description, an electric apparatus of an embodiment of this application being a vehicle 10000 is used as an example for description of the following embodiments.

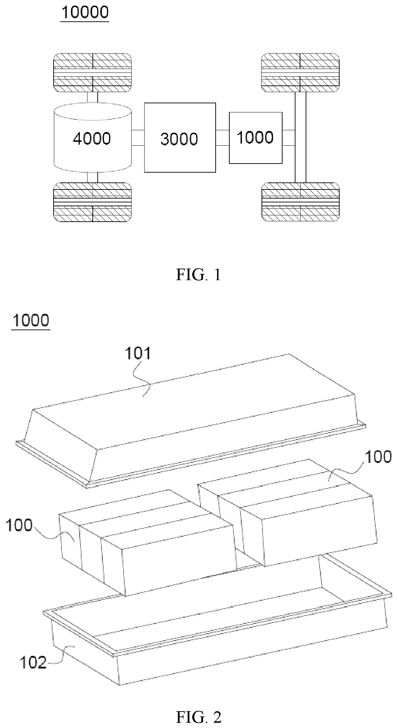

For example, FIG. 1 is a schematic structural diagram of a vehicle 10000 according to some embodiments of this application. The vehicle 10000 may be a fossil fuel vehicle, a natural gas vehicle, or a new energy vehicle. The new energy vehicle may be a battery electric vehicle, a hybrid electric vehicle, a range-extended electric vehicle, or the like. A motor 4000, a controller 3000, and a battery 1000 may be disposed inside the vehicle 10000, where the controller 3000 is configured to control the battery 1000 to supply power to the motor 4000. For example, the battery 1000 may be disposed at the bottom, front, or rear of the vehicle 10000. The battery 1000 can be configured to supply power to the vehicle 10000. For example, the battery 1000 can be used as an operational power source for the vehicle 10000 which is configured for a circuit system of the vehicle 10000, for example, to satisfy power needs of start, navigation, and running of the vehicle 10000. In another embodiment of this application, the battery 1000 may be used not only as the operational power source for the vehicle 10000, but also as a driving power source for the vehicle 10000, replacing or partially replacing fossil fuel or natural gas to provide driving traction for the vehicle 10000.

To meet different power usage requirements, the battery 1000 may include a plurality of battery cells 10, and the plurality of battery cells 10 may be connected in series, parallel, or series-parallel, where being connected in series-parallel means a combination of series and parallel connections. The battery 1000 may also be referred to as a battery pack. Optionally, a plurality of battery cells 10 may first be connected in series, parallel, or series-parallel to constitute a battery module 100, and then a plurality of battery modules 100 are connected in series, parallel, or series-parallel to constitute a battery 1000. In other words, the plurality of battery cells 10 may directly constitute the battery 1000, or may first constitute the battery modules 100 which then constitute the battery 1000.

For example, referring to FIG. 2, FIG. 2 is an exploded view of a battery 1000 according to some embodiments of this application. The battery 1000 may include a plurality of battery cells 10. The battery 1000 may further include a box (or referred to as a cover body), the inside of the box is a hollow structure, and the plurality of battery cells 10 are accommodated in the box. As shown in FIG. 2, the box includes two portions, which are herein referred to as a first portion 101 and a second portion 102 respectively. The first portion 101 and the second portion 102 are snap-fitted together. Shapes of the first portion 101 and the second portion 102 may be determined based on a shape in which the plurality of battery cells 10 are combined, and the first portion 101 and the second portion 102 each may have an opening. For example, the first portion 101 and the second portion 102 each may be a hollow cuboid with only one surface having an opening, the opening of the first portion 101 is opposite the opening of the second portion 102, and the first portion 101 and the second portion 102 are snap-fitted to form a box with an enclosed chamber. The plurality of battery cells 10 are connected in parallel, series, or series-parallel and then placed into the box formed by snap-fitting the first portion 101 and the second portion 102.

Optionally, the battery 1000 may further include other structures. Details are not described herein again. For example, the battery may further include a busbar, where the busbar is configured to implement an electrical connection between the plurality of battery cells 10, for example, in parallel, series, or series-parallel. Specifically, the busbar may implement the electrical connection between the battery cells 10 by connecting electrode terminals 4 of the battery cells 10. Further, the busbar may be fixed to the electrode terminals 4 of the battery cells 10 by welding. Electrical energy of the plurality of battery cells 10 may be further led out by a conductive mechanism that passes through the box. Optionally, the conductive mechanism may also belong to the busbar.

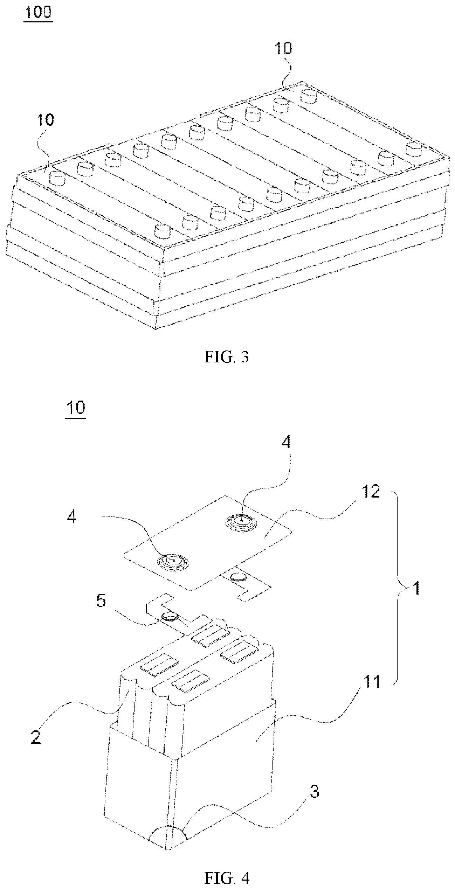

Based on different power demands, the battery cells 10 can be set in any quantity. The plurality of battery cells 10 may be connected in series, parallel, or series-parallel to achieve large capacity or power. Because the quantity of battery cells 10 included in each battery 1000 may be large, for ease of mounting, the battery cells 10 may be arranged in groups, and each group of battery cells 10 forms a battery module 100. The quantity of battery cells 10 included in the battery module 100 is not limited, and may be set as required. For example, FIG. 3 is a schematic structural diagram of a battery module 100 according to some embodiments of this application. The battery 1000 may include a plurality of battery modules 100, and these battery modules 100 may be connected in series, parallel, or series-parallel.

Referring to FIG. 4, FIG. 4 is an exploded view of a battery cell 10 according to some embodiments of this application. The battery cell 10 includes one or more electrode assemblies 2 and a housing 1. The housing 1 may include a housing body 11. A plurality of wall portions of the housing body 11, namely, a plurality of wall portions of the housing 1, enclose a chamber, and the chamber can be used to accommodate the electrode assemblies 2. The housing body 11 is determined based on a shape in which the one or more electrode assemblies 2 are combined. For example, the housing body 11 may be a hollow cuboid, cube, or polyhedra, and one surface of the housing body 11 has an opening such that the one or more electrode assemblies 2 can be put into the housing body 11. The housing body 11 has five wall portions, including four side walls and one bottom wall. The four side walls are disposed on the bottom wall and enclose a chamber together with the bottom wall. An included angle between two adjacent side walls of the four side walls is ninety degrees, and included angles between the side walls and the bottom wall are ninety degrees. The housing 1 may further include an end cover 12. It should be noted that the wall portions of the housing body 11 and the end cover 12 may all be referred to as the wall portions of the housing 1. For example, when the housing body 11 is a hollow cuboid or cube, one plane of the housing body 11 is an opening surface, which means that the plane has no wall portion such that the inside and the outside of the housing body 11 are communicated. The end cover 12 covers the opening and is connected to the housing body 11 to form an enclosed chamber for placing the electrode assemblies 2. The housing body 11 is filled with an electrolyte, for example, a liquid electrolyte.

The battery cell 10 may further include two electrode terminals 4, and the two electrode terminals 4 may be disposed on the end cover 12. The end cover 12 is generally in a shape of a flat plate, and the two electrode terminals 4 are fixed on a flat surface of the end cover 12. The two electrode terminals 4 are a positive electrode terminal 4 and a negative electrode terminal 4 respectively. Each electrode terminal 4 is correspondingly provided with a connecting member 5, which is also referred to as a current collecting member and is located between the end cover 12 and an electrode assembly 2 for electrically connecting the electrode assembly 2 and the electrode terminal 4.

In the battery cell 10, one or more electrode assemblies 2 may be provided based on actual use needs. As shown in FIG. 4, the battery cell 10 is provided with a plurality of independent electrode assemblies 2.

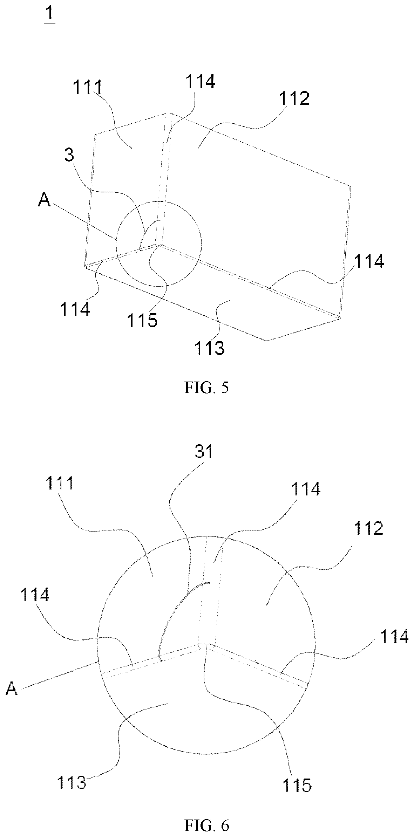

According to some embodiments of this application, referring to FIG. 5, FIG. 5 is a schematic structural diagram of a housing 1 according to some embodiments of this application. This application provides a housing 1, where the housing 1 has at least three edge portions 114 intersecting at a same vertex 115, and the housing 1 is provided with an indentation groove 3 intersecting with at least two of the edge portions 114.

The housing 1 may be a hollow cuboid, a hollow regular tetrahedron, a hollow frustum, a hollow regular dodecahedron, a hollow pyramid, or the like.

The position at which the at least three edge portions 114 of the housing 1 intersect may be referred to as the vertex 115.

If the housing 1 is a hollow cuboid, a hollow regular tetrahedron, a hollow frustum, or a hollow regular dodecahedron, three edge portions 114 of the housing 1 intersect at a same vertex 115; and if the housing 1 is a hollow pyramid, for example, the housing 1 is a hollow quadrangular pyramid, four lateral edge portions 114 of the housing 1 intersect at one vertex 115 of the housing 1.

The position at which two adjacent wall portions of the housing 1 are connected may be referred to as the edge portion 114. The housing 1 being a hollow cuboid is used as an example, where the position at which two adjacent wall portions are connected forms the edge portion 114. If the indentation groove 3 is provided on an outer surface of the wall portion and outer surfaces of the two adjacent wall portions intersect at an outer edge line, the indentation groove 3 intersecting with the outer edge line should be understood as the indentation groove 3 intersecting with the edge portion 114; and if the indentation groove 3 is provided on an inner surface of the wall portion and inner surfaces of the two adjacent wall portions intersect at an inner edge line, the indentation groove 3 intersecting with the inner edge line should also be understood as the indentation groove 3 intersecting with the edge portion 114. If the two adjacent wall portions are connected via an arc wall, the indentation groove 3 intersecting with the arc wall should also be understood as the indentation groove 3 intersecting with the edge portion 114.

The region in which the indentation groove 3 is designed on the housing 1 forms a weak portion, and the weak portion cracks when internal pressure or temperature or another condition of the housing 1 reaches a threshold, so as to relieve the internal pressure of the housing 1.

The indentation groove 3 may be in a plurality of segments or one segment. If the indentation groove 3 is in a plurality of segments, two of the segments may be connected or spaced apart.

The indentation groove 3 may be arc-shaped, strip-shaped, O-shaped, zigzag-shaped, or the like.

The indentation groove 3 may be formed on the housing 1 through various methods, such as stamping or milling.

The housing 1 has at least three edge portions 114 intersecting at a same vertex 115, and the indentation groove 3 intersects with at least two of the edge portions 114, such that the region in which the indentation groove 3 is provided on the housing 1 is located near the at least two edge portions 114 of the housing 1. Because the region near the edge portion 114 of the housing 1 has strong deformation resistance, the probability of abnormal cracking of the indentation groove 3 due to creeping of the region in which the indentation groove 3 is provided on the housing 1 is reduced, prolonging service life of the housing 1, thereby prolonging service life of the battery cell 10.

The edge portion 114 of the housing body 11 has the characteristics of high strength and strong deformation resistance, so with the indentation groove 3 arranged near the edge portion 114, the weak portion is less likely to deform when the weak portion of the indentation groove 3 is processed, making it easy to meet design requirements for processing of the weak portion, and allowing for convenient calculation of a pressure required for cracking of the weak portion of the indentation groove 3, thereby reducing difficulty in designing and processing the indentation groove 3.

In normal use of the battery cell 10, the weak portion is repeatedly impacted by the internal pressure of the housing 1, so the weak portion being designed near the vertex 115 can reduce the probability of abnormal cracking of the indentation groove 3 due to creeping of the weak portion. When the indentation groove 3 cracks for pressure relief, an inner wall of the housing 1 near the vertex 115 converges gas, improving pressure relief efficiency.

According to some embodiments of this application, referring to FIG. 6, FIG. 6 is a partially enlarged view of position A in FIG. 5 of this application. The housing 1 includes a first wall 111, a second wall 112, and a third wall 113, where the first wall 111, the second wall 112, and the third wall 113 are connected to each other in pairs to form three of the edge portions 114 intersecting at the vertex 115.

The first wall 111, the second wall 112, and the third wall 113 may also be referred to as the wall portions of the housing 1.

An included angle between two adjacent wall portions of the first wall 111, the second wall 112, and the third wall 113 may be a right angle, an acute angle, or an obtuse angle. If the housing 1 is a hollow cuboid, the included angle between two adjacent walls of the first wall 111, the second wall 112, and the third wall 113 is a right angle; if the housing 1 is a hollow pyramid, the included angle between two adjacent walls of the first wall 111, the second wall 112, and the third wall 113 is an acute angle; and if the housing 1 is a hollow regular dodecahedron, the included angle between two adjacent walls of the first wall 111, the second wall 112, and the third wall 113 is an obtuse angle.

The hollow cuboid housing 1 is used as an example. The housing 1 has six walls, where the housing body 11 has five walls, and the other wall is the end cover 12. The first wall 111, the second wall 112, and the third wall 113 may be any three adjacent walls of the six walls. For example, the first wall 111, the second wall 112, and the third wall 113 are three adjacent walls of the housing body 11. In FIG. 6, the first wall 111 and the second wall 112 are two adjacent side walls of the housing body 11, and the third wall 113 is the bottom wall.

The housing 1 having three edge portions 114 intersecting at a same vertex 115 may be a cuboid, a regular tetrahedron, or of another shape, and such a housing 1 has advantages such as ease of processing and mass production.

According to some embodiments of this application, referring to FIG. 6, the indentation groove 3 includes a first groove segment 31, where the first groove segment 31 is disposed on the first wall 111, and two ends of the first groove segment 31 extend to two of the edge portions 114 located at edges of the first wall 111 respectively.

The first groove segment 31 may be arc-shaped, strip-shaped, zigzag-shaped, or the like.

The first groove segment 31 may be disposed on an inner surface of the first wall 111 or on an outer surface of the first wall 111.

The two edge portions 114 of the first wall 111 can reinforce the region in which the first groove segment 31 is disposed on the housing 1, thereby improving fatigue resistance of the region in which the first groove segment 31 is disposed on the housing 1 and prolonging the service life of the battery cell 10.

According to some embodiments of this application, referring to FIG. 6, the first groove segment 31 is arc-shaped.

If each portion of the first groove segment 31 has basically the same distance to the vertex 115, the first groove segment 31 may be referred to as arc-shaped.

With such a design, each portion of the first groove segment 31 has basically the same distance to the vertex 115, so that each portion of the first groove segment 31 has roughly equal difficulty in bursting, allowing the first groove segment 31 to crack in a timely manner, thereby improving the pressure relief efficiency.

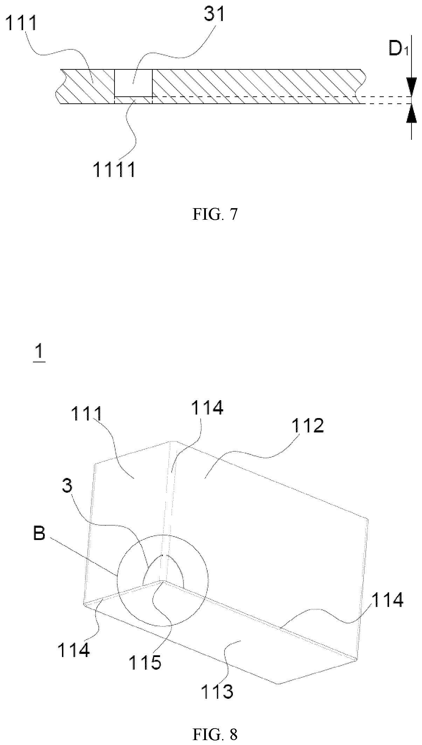

According to some embodiments of this application, referring to FIG. 7, FIG. 7 is a partially cross-sectional view of the first wall 111 shown in FIG. 5. The first groove segment 31 is disposed on the first wall 111 to form a first weak portion 1111, where thickness of the first weak portion 1111 is D₁, satisfying 0.05 mm ≤ D₁ ≤ 0.7 mm.

The thickness of the first weak portion 1111 is a thickness that needs to be broken when the indentation groove 3 cracks for pressure relief.

The thickness of the first weak portion 1111 may be uniform or non-uniform. Referring to FIG. 7, if the thickness of the first weak portion 1111 is uniform, D₁ is the thickness of the first weak portion 1111 at any position. If the thickness of the first weak portion 1111 is non-uniform, D₁ is the minimum thickness of the first weak portion 1111.

D₁ may be any value from 0.05 mm to 0.7 mm, for example, 0.05 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, or 0.7 mm.

The thickness of the first weak portion 1111 being set within an appropriate range can reduce the risk of insufficient bursting pressure due to excessively small thickness and inadequate strength of the first weak portion 1111, and can also reduce the risk of the indentation groove 3 failing to crack for pressure relief in a timely manner due to excessively large thickness of the first weak portion 1111.

According to some embodiments of this application, referring to FIG. 8, FIG. 8 is a schematic structural diagram of the housing 1 according to some other embodiments of this application. The indentation groove 3 further includes a second groove segment 32, where the second groove segment 32 is disposed on the second wall 112, and two ends of the second groove segment 32 extend to two of the edge portions 114 located at edges of the second wall 112 respectively.

The second groove segment 32 may be arc-shaped, strip-shaped, zigzag-shaped, or the like.

The second groove segment 32 may be disposed on an inner surface of the second wall 112 or on an outer surface of the second wall 112.

An end of the first groove segment 31 may be connected to or spaced apart from an end of the second groove segment 32.

The two ends of the second groove segment 32 extend to the two edge portions 114 located at the edges of the second wall 112 respectively. The two edge portions 114 of the second wall 112 can reinforce the region in which the second groove segment 32 is disposed on the housing 1, thereby improving fatigue resistance of the region in which the second groove segment 32 is disposed on the housing 1 and prolonging the service life of the battery cell 10. In addition, with the first groove segment 31 disposed on the first wall 111, the second groove segment 32 is disposed on the second wall 112, so that when the battery cell 10 relieves the pressure, the housing 1 can crack at the positions of the first groove segment 31 and the second groove segment 32, increasing a pressure relief area of a pressure relief apparatus, thereby improving the pressure relief efficiency.

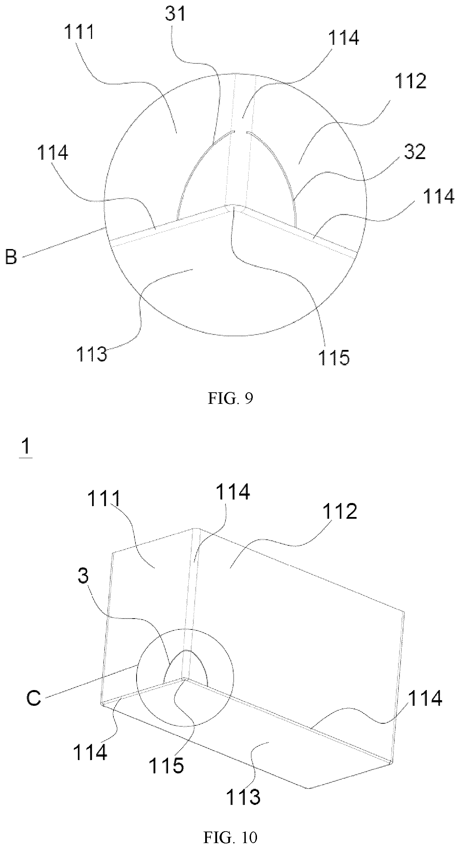

According to some embodiments of this application, referring to FIG. 9, FIG. 9 is a partially enlarged view of position B in FIG. 8 of this application. The second groove segment 32 is arc-shaped.

If each portion of the second groove segment 32 has basically the same distance to the vertex 115, the second groove segment 32 may be referred to as arc-shaped.

With the second groove segment 32 arc-shaped, the first groove segment 31 may also be arc-shaped, and each portion of the first groove segment 31 and the second groove segment 32 has basically the same distance to the vertex 115, so that each portion of the first groove segment 31 and the second groove segment 32 has roughly equal difficulty in bursting.

With such a design, each portion of the second groove segment 32 has the same distance to the vertex 115, so that each portion of the second groove segment 32 has roughly equal difficulty in bursting, allowing the second groove segment 32 to crack in a timely manner, thereby improving the pressure relief efficiency.

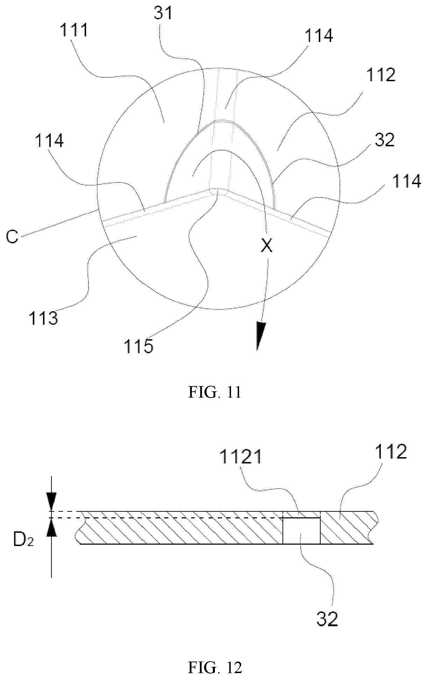

According to some embodiments of this application, referring to FIG. 10 and FIG. 11, FIG. 10 is a schematic structural diagram of the housing 1 according to still some other embodiments of this application, and FIG. 11 is a partially enlarged schematic structural diagram of position C in FIG. 10 of this application. The second groove segment 32 is connected to the first groove segment 31.

For example, in FIG. 11, the connection position of the second groove segment 32 and the first groove segment 31 is located at the edge portion 114 where the first wall 111 and the second wall 112 are connected.

With such a design, the housing 1 can partially open along a direction X with the first groove segment 31 and the second groove segment 32 as boundaries, increasing the pressure relief area, thereby improving the pressure relief efficiency.

According to some embodiments of this application, referring to FIG. 7 and FIG. 12, FIG. 12 is a partially cross-sectional view of the second wall 112 shown in FIG. 8 or FIG. 10. The first groove segment 31 is disposed on the first wall 111 to form a first weak portion 1111, and the second groove segment 32 is disposed on the second wall 112 to form a second weak portion 1121; where thickness of the first weak portion 1111 is equal to thickness of the second weak portion 1121.

When the indentation groove 3 cracks for pressure relief, a thickness that needs to be broken of the position at which the second groove segment 32 is disposed on the housing body 11 may be referred to as the thickness of the second weak portion 1121.

When the indentation groove 3 cracks for pressure relief, the position at which the first groove segment 31 is disposed on the housing body 11 and the position at which the second groove segment 32 is disposed on the housing body 11 have the same thickness that needs to be broken, which may be referred to as the thickness of the first weak portion 1111 being equal to the thickness of the second weak portion 1121.

With such a design, the first weak portion 1111 and the second weak portion 1121 have roughly equal difficulty in cracking, allowing the first weak portion 1111 and the second weak portion 1121 to crack synchronously during pressure relief.

According to some embodiments of this application, referring to FIG. 12, FIG. 12 is a partially cross-sectional view of the second wall 112 shown in FIG. 8 or FIG. 10. The second groove segment 32 is disposed on the second wall 112 to form a second weak portion 1121; where thickness of the second weak portion 1121 is D₂, satisfying 0.05 mm ≤ D₂ ≤ 0.7 mm.

The thickness of the second weak portion 1121 may be uniform or non-uniform. Referring to FIG. 12, if the thickness of the first weak portion 1111 is uniform, D₂ is the thickness of the first weak portion 1111 at any position. If the thickness of the first weak portion 1111 is non-uniform, D₂ is the minimum thickness of the first weak portion 1111.

D₂ may be any value from 0.05 mm to 0.7 mm, for example, 0.05 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, or 0.7 mm.

The thickness of the second weak portion 1121 being set within an appropriate range can reduce the risk of insufficient bursting pressure due to excessively small thickness and inadequate strength of the second weak portion 1121, and can also reduce the risk of the indentation groove 3 failing to crack for pressure relief in a timely manner due to excessively large thickness of the second weak portion 1121.

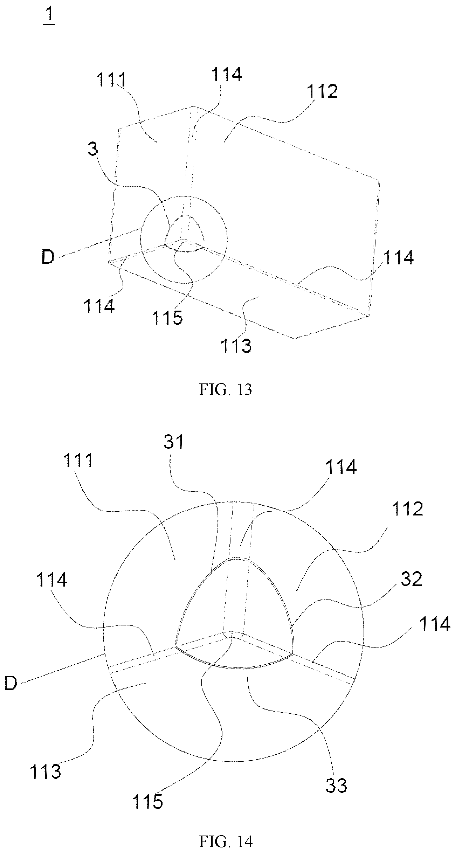

According to some embodiments of this application, referring to FIG. 13, FIG. 13 is a schematic structural diagram of the housing 1 according to yet some other embodiments of this application. The indentation groove 3 includes a third groove segment 33, where the third groove segment 33 is disposed on the third wall 113, and two ends of the third groove segment 33 extend to two of the edge portions 114 located at edges of the third wall 113 respectively.

The third groove segment 33 may be arc-shaped, strip-shaped, zigzag-shaped, or the like.

The third groove segment 33 may be disposed on an inner surface of the third wall 113 or on an outer surface of the third wall 113.

The first groove segment 31, the second groove segment 32, and the third groove segment 33 may all be not connected, or two of the groove segments may be connected but spaced apart from the remaining groove segment, or the three groove segments may be connected end to end in sequence. For example, referring to FIG. 13, two ends of the third groove segment 33 are connected to the first groove segment 31 and the second groove segment 32 respectively, and an end of the first groove segment 31 facing away from the third groove segment 33 is connected to an end of the second groove segment 32 facing away from the third groove segment 33.

The two ends of the third groove segment 33 extend to the two edge portions 114 located at the edges of the third wall 113 respectively. The two edge portions 114 of the third wall 113 can reinforce the region in which the third groove segment 33 is disposed on the housing 1, thereby improving fatigue resistance of the region in which the third groove segment 33 is disposed on the housing 1 and prolonging the service life of the battery cell 10.

In addition, with the first groove segment 31 disposed on the first wall 111 and the second groove segment 32 disposed on the second wall 112, the third groove segment 33 is disposed on the third wall 113, so that when the battery cell 10 relieves the pressure, the housing 1 can crack at the positions of the first groove segment 31, the second groove segment 32, and the third groove segment 33, increasing the pressure relief area of the pressure relief apparatus, thereby improving the pressure relief efficiency.

According to some embodiments of this application, referring to FIG. 14, FIG. 14 is a partially enlarged schematic structural diagram of position D in FIG. 13 of this application. The third groove segment 33 is arc-shaped.

If each portion of the third groove segment 33 has basically the same distance to the vertex 115, the third groove segment 33 may be referred to as arc-shaped.

For example, the first groove segment 31, the second groove segment 32, and the third groove segment 33 may all be arc-shaped, and each portion of the first groove segment 31, the second groove segment 32, and the third groove segment 33 has basically the same distance to the vertex 115, so that each portion of the first groove segment 31, the second groove segment 32, and the third groove segment 33 has roughly equal difficulty in bursting.

With such a design, each portion of the third groove segment 33 has the same distance to the vertex 115, so that each portion of the third groove segment 33 has roughly equal difficulty in bursting, allowing the third groove segment 33 to crack in a timely manner, thereby improving the pressure relief efficiency.

In addition, when each portion of the second groove segment 32, the first groove segment 31, and the third groove segment 33 has roughly equal difficulty in bursting, the second groove segment 32, the first groove segment 31, and the third groove segment 33 can crack in a timely manner, allowing the housing 1 to discharge gas in a timely manner while increasing the pressure relief area of the housing 1.

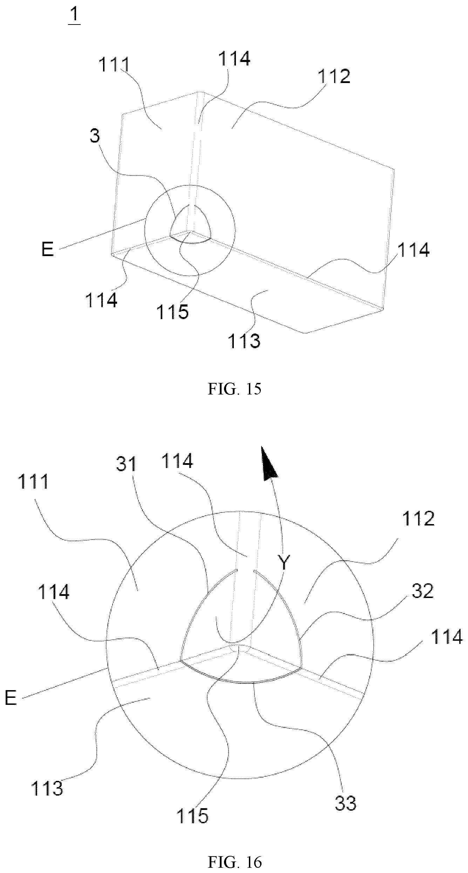

According to some embodiments of this application, referring to FIG. 14, FIG. 15, and FIG. 16, FIG. 15 is a schematic structural diagram of the housing 1 according to other embodiments of this application, and FIG. 16 is a partially enlarged schematic structural diagram of position E in FIG. 15. Two ends of the third groove segment 33 are connected to the first groove segment 31 and the second groove segment 32 respectively, and an end of the first groove segment 31 facing away from the third groove segment 33 is connected to or spaced apart from an end of the second groove segment 32 facing away from the third groove segment 33.

For example, in FIG. 16, the end of the first groove segment 31 facing away from the third groove segment 33 is spaced apart from the end of the second groove segment 32 facing away from the third groove segment 33, and the first groove segment 31 and the second groove segment 32 are spaced apart by the edge portion 114.

When the end of the first groove segment 31 facing away from the third groove segment 33 is connected to the end of the second groove segment 32 facing away from the third groove segment 33 to form a connection region, the region jointly defined by the first groove segment 31, the second groove segment 32, and the third groove segment 33 can detach to open for pressure relief, allowing the housing 1 to have a large pressure relief area when relieving the pressure, thereby improving the pressure relief efficiency.

When the end of the first groove segment 31 facing away from the third groove segment 33 is spaced apart from the end of the second groove segment 32 facing away from the third groove segment 33, the region jointly defined by the first groove segment 31, the second groove segment 32, and the third groove segment 33 can flip along a direction Y to open for pressure relief. When the housing 1 has a large pressure relief area, the portion of the housing 1 that flips along the direction Y does not detach from the main body of the housing 1, reducing the probability of secondary damage to the battery 1000.

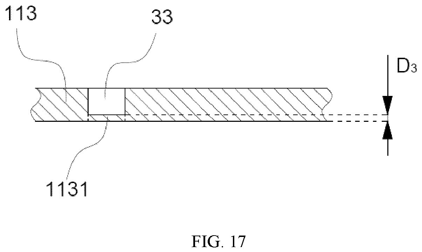

According to some embodiments of this application, the first groove segment 31 is disposed on the first wall 111 to form a first weak portion 1111, and the second groove segment 32 is disposed on the second wall 112 to form a second weak portion 1121. Referring to FIG. 17, FIG. 17 is a partially cross-sectional view of the third wall 113 shown in FIG. 13 or FIG. 15 of this application. The third groove segment 33 is disposed on the third wall 113 to form a third weak portion 1131, where thickness of the first weak portion 1111, thickness of the second weak portion 1121, and thickness of the third weak portion 1131 are equal.

The thickness of the third weak portion 1131 is a thickness that needs to be broken of the position at which the third groove segment 33 is disposed on the housing body 11 when the indentation groove 3 cracks for pressure relief.

When the indentation groove 3 cracks for pressure relief, the position at which the first groove segment 31 is disposed on the housing body 11, the position at which the second groove segment 32 is disposed on the housing body 11, and the position at which the third groove segment 33 is disposed on the housing body 11 have the same thickness that needs to be broken, which may be referred to as the thickness of the first weak portion 1111, the thickness of the second weak portion 1121, and the thickness of the third weak portion 1131 being equal.

With such a design, the first weak portion 1111, the second weak portion 1121, and the third weak portion 1131 have roughly equal difficulty in cracking, allowing the first weak portion 1111, the second weak portion 1121, and the third weak portion 1131 to crack synchronously during pressure relief.

According to some embodiments of this application, referring to FIG. 17, the third groove segment 33 is disposed on the third wall 113 to form a third weak portion 1131, where thickness of the third weak portion 1131 is D₃, satisfying 0.05 mm ≤ D₃ ≤ 0.7 mm.

The thickness of the third weak portion 1131 may be uniform or non-uniform. Referring to FIG. 17, if the thickness of the third weak portion 1131 is uniform, D₃ is the thickness of the third weak portion 1131 at any position. If the thickness of the third weak portion 1131 is non-uniform, D₃ is the minimum thickness of the third weak portion 1131.

D₃ may be any value from 0.05 mm to 0.7 mm, for example, 0.05 mm, 0.1 mm, 0.15 mm, 0.2 mm, 0.25 mm, 0.3 mm, 0.35 mm, 0.4 mm, 0.45 mm, 0.5 mm, 0.55 mm, 0.6 mm, 0.65 mm, or 0.7 mm.

The thickness of the third weak portion 1131 being set within an appropriate range can reduce the risk of insufficient bursting pressure due to excessively small thickness and inadequate strength of the third weak portion 1131, and can also reduce the risk of the indentation groove 3 failing to crack for pressure relief in a timely manner due to excessively large thickness of the third weak portion 1131.

According to some embodiments of this application, the housing 1 includes an accommodating space formed by a plurality of walls, where the accommodating space is used to accommodate an electrode assembly 2, the accommodating space has an opening, and the opening is opposite the third wall 113.

The hollow cuboid housing 1 is used as an example. The internal space of the housing body 11 is used to accommodate the electrode assembly 2, the housing body 11 is provided with an opening on a side opposite the bottom wall, and the end cover 12 is connected to the housing 1 at the opening of the housing 1 to form the enclosed housing 1 of the battery cell 10.

Such a housing 1 can accommodate the electrode assembly 2 through the opening, resulting in low assembly difficulty of the electrode assembly 2.

In some embodiments, the first wall 111, the second wall 112, and the third wall 113 are connected to each other in pairs via arc walls, the arc walls being the edge portions 114.

In some embodiments, the housing 1 is a cuboid.

In some embodiments, the indentation groove 3 is provided on an outer surface of the housing 1.

The indentation groove 3 being provided on the outer surface of the housing 1 can reduce processing difficulty of the indentation groove 3.

According to a second aspect, this application provides a battery cell 10 including the housing 1 according to the foregoing embodiments.

According to a third aspect, this application provides a battery 1000 including a box configured to accommodate a battery cell 10 and the battery cell 10 according to the foregoing embodiments.

According to a fourth aspect, this application provides an electric device including the battery 1000 according to the foregoing embodiments.

According to some embodiments of this application, referring to FIG. 15 and FIG. 16, this application provides a hollow cuboid housing 1. The housing 1 includes a housing body 11 and a cover plate. A plurality of walls of the housing body 11 include a first wall 111, a second wall 112, and a third wall 113. An indentation groove 3 is provided on an outer surface of the housing 1. The indentation groove 3 includes a first groove segment 31 disposed on the first wall 111, a second groove segment 32 disposed on the second wall 112, and a third groove segment 33 disposed on the third wall 113. Two ends of the first groove segment 31 extend to two edge portions 114 located at edges of the first wall 111 respectively, two ends of the second groove segment 32 extend to two edge portions 114 located at edges of the second wall 112 respectively, and two ends of the third groove segment 33 extend to two edge portions 114 located at edges of the third wall 113 respectively.

The first groove segment 31, the second groove segment 32, and the third groove segment 33 are all arc-shaped. Two ends of the third groove segment 33 are connected to the first groove segment 31 and the second groove segment 32 respectively. An end of the first groove segment 31 facing away from the third groove segment 33 is spaced apart from an end of the second groove segment 32 facing away from the third groove segment 33.

When internal pressure, temperature, or another threshold of the housing 1 reaches a designed value, the region jointly defined by the first groove segment 31, the second groove segment 32, and the third groove segment 33 can flip along a direction Y to open for pressure relief.

The foregoing embodiments are merely preferred embodiments of this application which are not intended to limit this application. Persons skilled in the art understand that this application may have various modifications and variations. Any modification, equivalent replacement, and improvement made without departing from the spirit and principle of this application shall fall within the protection scope of this application.

## Claims

1. A housing, wherein the housing has at least three edge portions intersecting at a same vertex; and
the housing is provided with an indentation groove, the indentation groove intersecting with at least two of the edge portions.

2. The housing according to claim 1, wherein the housing comprises a first wall, a second wall, and a third wall, and the first wall, the second wall, and the third wall are connected to each other in pairs to form three of the edge portions intersecting at the vertex.

3. The housing according to claim 2, wherein the indentation groove comprises a first groove segment, the first groove segment is disposed on the first wall, and two ends of the first groove segment extend to two of the edge portions located at edges of the first wall respectively.

4. The housing according to claim 3, wherein the first groove segment is arc-shaped.

5. The housing according to claim 3 or 4, wherein the first groove segment is disposed on the first wall to form a first weak portion, and thickness of the first weak portion is D₁, satisfying 0.05 mm ≤ D₁ ≤ 0.7 mm.

6. The housing according to any one of claims 3 to 5, wherein the indentation groove further comprises a second groove segment, the second groove segment is disposed on the second wall, and two ends of the second groove segment extend to two of the edge portions located at edges of the second wall respectively.

7. The housing according to claim 6, wherein the second groove segment is arc-shaped.

8. The housing according to claim 6 or 7, wherein the second groove segment is connected to the first groove segment.

9. The housing according to any one of claims 6 to 8, wherein the first groove segment is disposed on the first wall to form a first weak portion, the second groove segment is disposed on the second wall to form a second weak portion, and thickness of the first weak portion is equal to thickness of the second weak portion.

10. The housing according to any one of claims 6 to 9, wherein:
the second groove segment is disposed on the second wall to form a second weak portion; and
thickness of the second weak portion is D₂, satisfying 0.05 mm ≤ D₂ ≤ 0.7 mm.

11. The housing according to any one of claims 6 to 10, wherein the indentation groove comprises a third groove segment, the third groove segment is disposed on the third wall, and two ends of the third groove segment extend to two of the edge portions located at edges of the third wall respectively.

12. The housing according to claim 11, wherein the third groove segment is arc-shaped.

13. The housing according to claim 11 or 12, wherein two ends of the third groove segment are connected to the first groove segment and the second groove segment respectively, and an end of the first groove segment facing away from the third groove segment is connected to or spaced apart from an end of the second groove segment facing away from the third groove segment.

14. The housing according to any one of claims 11 to 13, wherein the first groove segment is disposed on the first wall to form a first weak portion, the second groove segment is disposed on the second wall to form a second weak portion, the third groove segment is disposed on the third wall to form a third weak portion, and thickness of the first weak portion, thickness of the second weak portion, and thickness of the third weak portion are equal.

15. The housing according to any one of claims 11 to 14, wherein the third groove segment is disposed on the third wall to form a third weak portion, and thickness of the third weak portion is D₃, satisfying 0.05 mm ≤ D₃ ≤ 0.7 mm.

16. The housing according to any one of claims 2 to 15, wherein the housing comprises an accommodating space formed by a plurality of walls, the accommodating space is used to accommodate an electrode assembly, the accommodating space has an opening, and the opening is opposite the third wall.

17. The housing according to any one of claims 2 to 15, wherein the first wall, the second wall, and the third wall are connected to each other in pairs via arc walls, the arc walls being the edge portions.

18. The housing according to any one of claims 1 to 15, wherein the housing is a cuboid.

19. The housing according to any one of claims 1 to 15, wherein the indentation groove is provided on an outer surface of the housing.

20. A battery cell, comprising the housing according to any one of claims 1 to 19.

21. A battery, comprising:
the battery cell according to claim 20; and
a box configured to accommodate the battery cell.

22. An electric device, comprising the battery according to claim 21.
